# EUROPEAN PATENT APPLICATION

(11) **EP 1 624 663 A1**
(43) Date of publication of application: **08.02.2006**
(21) Application number: 04732421.5
(22) Date of filing: 12.05.2004
(51) Int. Cl.: H04N 1/00

(54) **IMAGE READER**

(30) Priority: 13.05.2003 JP 2003134824
(71) Applicant: PFU LIMITED, Kahoku-gun Ishikawa 929-1192 (JP)
(72) Inventor: KUSUNOKI, Tadakazu, c/o PFU LIMITED, Kahoku-shi, Ishikawa 9291192 (JP); NAKAJIMA, Toshiki, c/o PFU LIMITED, Kahoku-shi, Ishikawa 9291192 (JP); KITAGAWA, Koichi, c/o PFU LIMITED, Kahoku-shi, Ishikawa 9291192 (JP); KUTSUWADA, Daisuke, c/o PFU LIMITED, Kahoku-shi, Ishikawa 9291192 (JP); KANEMITSU, Norio, c/o PFU LIMITED, Kahoku-shi, Ishikawa 9291192 (JP)
(74) Representative: Reichel, Wolfgang
(86) International application number: PCT/JP2004/006372
(87) International publication number: WO 2004/102947

(57) **Abstract**

An image reader (100) has a removable memory device (2) which stores authentication information for performing identity authentication of a user. An image reader body (1) has an authentication processing unit (6) performing the identity authentication to identify whether a user is the authorized person by checking authentication information (8) stored in the removable memory device (2) and registered authentication information (9) in advance in the image reader (100) with each other. Only when the authentication by the authentication processing unit (6) is successful, a document (3) is read by using the image reader (100), and a digital signature or approval information is added to image data (15) which has been read.

## Description

### Technical Field

This invention relates to an image reader for optically reading a document as an image data in an electronic form, and more particularly to an image reader having a removable memory device and makes it possible to enable identity authentication of a user who uses the image reader to be performed and to add approval information or digital signature information to image data which has been read after the authentication, by storing authentication information about the user in the removable memory device.

### Background Art

It is increasingly common, in companies or the like, that a document printed on papers or the like is digitized and stored as image data in an electric form in order to solve problems of sharing of information and a preservation place. In utilizing such image data, it is increasingly required to prevent injustice or unauthorized use of the image data, such as tampering of the image data and spoofing as the creator of the image data.

Conventionally, there have been designed apparatuses described in below. That is, a processing of identity authentication of a user by using a password is performed on a personal computer to which an image reader is connected. Then, only an authenticated person can perform reading of an image by using the image reader. And, digital signature information or approval information is added to the image data by using a secret key for electronic authentication which is managed by a personal computer which is a host or a higher-performance workstation.

See patent document 1: Japanese Patent Laid-Open No. 08-139717.

However, recently, there have been increasingly employed usage method in which an image reader is not connected to the personal computer (host) which is a host but is used as a stand-alone, and an image data read by the image reader is directly stored in a removable memory device. In such a case, identity authentication processing or digital signature processing cannot be performed by the above-described conventional apparatus in which identity authentication processing or digital signature processing is performed on the personal computer.

It is an object of the present invention to provide an image reader which can reliably perform identity authentication and prevent unauthorized use of the image data read by the image reader such as tampering and spoofing, even when the image reader is used without being connected to a host apparatus such as a personal computer, or even when the image reader is connected to a host apparatus which does not have functions of identity authentication and digital signature processings.

### Disclosure of the Invention

An image reader of the present invention comprises a removable memory device provided on the image reader removably and storing authentication information for performing identity authentication for a user of the image reader, and an authentication processing unit performing identity authentication by using the authentication information stored in the removable memory device.

Preferably, a password may be stored as the authentication information in the removable memory device, and the user may input a password from password input unit provided for the image reader when starting to use the image reader. The authentication to identify whether the user is the authorized person is performed by checking the inputted password and the password stored in the removable memory device with each other to perform.

Preferably, biometrics information about the user may be stored as the authentication information to be stored in the removable memory device, and a fingerprint reader or a voice print detector may be provided on the image reader. The authentication to identify whether the user is the authorized person is performed by checking the biometrics information about the user obtained from such detection devices and the biometrics information stored in the removable memory device with each other.

Preferably, when the identity authentication by the above-described authentication processing unit is successful, the image reader further includes an approval image addition unit adding an image showing completion of approval, such as an image of a seal impression, a signature or a logotype, to an image read by the image reader.

Preferably, the approval image addition unit adding an image showing completion of approval may perform the image adding processing by using an image showing completion of approval which is stored in the removable memory device and which is specific to the user.

Preferably, the approval image addition unit adding an image showing completion of approval may add an image showing completion of approval at a predetermined position, when an image read by the image reader has a predetermined format.

Preferably, the approval image addition unit adding an image showing completion of approval may detect a mark written on the document and add an image showing completion of approval after changing the color or the size of the image showing completion of approval according to the content indicated by the mark.

Preferably, the approval image addition unit adding an image showing completion of approval may detect a mark written on the document, switch among a plurality of types of image showing completion of approval according to the content indicated by the mark, and add the switched image showing completion of approval.

Preferably, the image reader further includes a digital signature processing unit performing a digital signature processing on an image data read by the image reader, when authentication by the authentication processing unit is successful.

Preferably, the digital signature processing unit may perform digital signature processing by using information stored in the removable memory device.

Preferably, when authentication by the authentication processing unit is successful, the image reader may recognize a format of an image of the document which is read by the image reader by a format determination unit, and may be provided with a image data storage processing unit. The image data storage processing unit stores the image of the document which is read by the image reader in a specified storage destination by using the information on the format and image data storage destination information according to every format stored in the removable memory device.

Preferably, when authentication by the authentication processing unit is successful, the image reader may detect a mark written on the document, and may be provided with a image data storage processing unit. The image data storage processing unit stores the image data read by the image reader in a specified storage destination by using the content indicated by the mark and image data storage destination information according to every content indicated by mark, which is stored in the removable memory device.

By performing the identity authentication by using the authentication information stored in the removable memory device, it is possible to disable use of the image reader unless the image reader is attached with the removable memory device in which valid authentication information is stored. And, thereby it is possible to prevent unauthorized use of the image reader by a person who does not have the removable memory device storing the valid authentication information.

By checking the inputted password and the password stored in the removable memory device with each other, it is possible to disable use of the image reader unless the image reader is attached with the removable memory device in which valid authentication information is stored. And, thereby it is possible to prevent unauthorized use of the image reader by a person who does not have the removable memory device storing the valid password information.

By checking the biometrics information about a user and the biometrics information stored in the removable memory device with each other, it is possible to perform the authentication processing by using data for identity authentication which is difficult to forge. Thereby, performing more strict identity authentication makes it possible to prevent unauthorized use of the image reader.

By adding the image showing completion of approval such as an image of a seal impression, a signature or a logotype to the image read by the image reader, it is possible for a user authenticated as the authorized person to read a document requiring approval by the image reader. Thereby, it becomes possible to perform generating electronic data of the paper document and approval processing at the same time.

By adding the image showing completion of approval which is stored in the removable memory device and which is specific to a user, it is possible to add the image showing completion of approval, which is stored in the memory device owned only by the user and which is specific to the user, to image data when reading the image data by the image reader. Thereby, reliability of approval of the image data read by the image reader can be enhanced.

When the image read by the image reader is a image which has a predetermined format, by adding the image showing completion of approval at the predetermined position, it is possible, after reading a document having the predetermined format and a specified position at which an approval stamp is to be pressed, to automatically determine the position by determining the format of the document and add the image showing completion of approval, such as the image of a seal impression, at the appropriate position.

By adding the image showing completion of approval according to the content indicated by the mark written on the document, it is possible, even in a case of reading a document which does not have a predetermined format, to automatically add the image showing completion of approval to the image data with appropriate color and size located at an appropriate position, due to writing the mark on the document by the user.

By adding one of a plurality of types of image showing completion of approval according to the content indicated by the mark written on the document, it is possible, when there are a plurality of types of image showing completion of approval and when the mark corresponding to the required type of image showing completion of approval is written by the user, to detect the mark and automatically add an appropriate type of image at an appropriate position.

By performing the digital signature processing on the image data read by the image reader by using information stored in the removable memory device after identity authentication, the digital signature information indicating the creator of the image data is added to the image data read by the image reader. Thereby, it is possible, in subsequently utilizing the image data, to prevent unauthorized use of the image data, such as tampering and spoofing. In this case, the identity authentication is performed by using authentication information stored in the removable memory device which is owned only by the user. Furthermore, the digital signature uses information for digital signature stored in the removable memory device which is owned only by the user. Thus, it is possible to reliably ensure that the user himself has created the image data.

By storing the image data read by the image reader in a specified storage destination by using format information about the read document and image data storage destination information stored in the removable memory device, after identity authentication, it is possible to reliably authenticate the person who is the user according to information stored in the removable memory device, and it is possible to automatically store image of the document having a predetermined format in a specified storage location when reading is performed, owing to storing by the authenticated user storage destination to which the image data read by the image reader are to be stored in the removable memory device in advance every format of documents to be read.

By storing the image data read by the image reader in a specified storage destination by using the content indicated by the mark written on the document and image data storage destination information stored in the removable memory device, after identity authentication, it is possible to reliably authenticate the person who is the user according to information stored in the removable memory device, and it is possible to detect the mark and automatically store in a specified destination storage location the image data on which the mark is given when the document with the mark thereon is read, owing to storing by the authenticated user storage destination to which the image data read by the image reader are to be stored in the removable memory device in advance according to contents of the mark, and owing to giving a predetermined mark on the document to be read.

### Brief Description of the Drawings

FIG. 1 is a whole block diagram of the present invention.
FIG. 2 illustrates a case that checking is performed by using registered in advance authentication information.
FIG. 3 illustrates an authentication process using password input.
FIG. 4 illustrates a case that biometrics information is used as authentication information.
FIG. 5 illustrates an approval image information addition process.
FIG. 6A and FIG. 6B illustrate a process for selecting an approval image according to a type of a format or a mark.
FIG. 7 illustrates a digital signature process.
FIG. 8 illustrates a process for automatically storing image data read by an image reader.

### Best Mode for Carrying Out the Invention

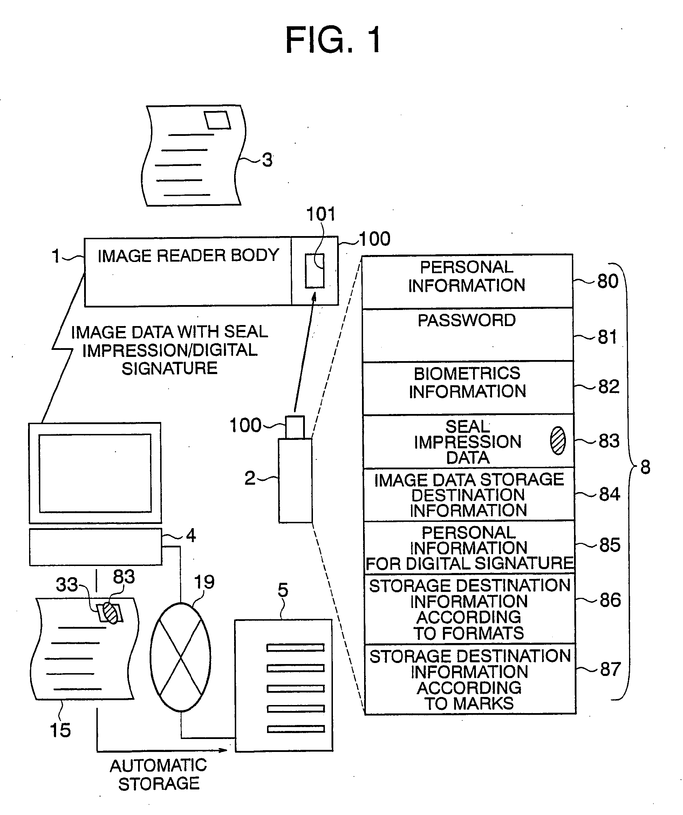

As shown in FIG. 1, an image reader 100 is provided with an image reader body 1 for reading a document 3, and a removable memory device 2 which stores authentication information 8 for performing identity authentication of a user. The image reader body 1 is provided with an authentication processing unit 6 performing identity authentication to identify whether the user is the authorized person by checking the authentication information 8 (for example, personal information 80) stored in the removable memory device 2 and authentication information registered in advance in the image reader body 1 with each other.

A password 81 may be stored as the authentication information 8 in the removable memory device 2. In this case, at the starting to use the image reader 100, a user is caused to input a password from a password input unit 10 provided for the image reader body 1, and the inputted password and the password 81 stored in the removable memory device 2 are checked with each other to perform the identity authentication.

As the authentication information 8, biometrics information 82 (personal identification information such as a fingerprint and a voice print, etc.) about a user may be stored in the removable memory device 2. In this case, the image reader 100 is provided with an authentication processing unit 6 performing identity authentication to identify whether the user is the authorized person by checking the stored biometrics information 82 and information about the user read from a fingerprint reader or a voice print detector provided in the image reader body 1 with each other.

Only when the authentication by the authentication processing unit 6 is successful, reading of the document 3 can be performed by using the image reader 100.

The image reader 100 is provided with an approval image addition unit 14 adding an image 83 indicating completion of approval, such as an image of a seal impression, a signature or a logotype, to image data 15 which has been read, after the authentication by the authentication processing unit 6.

The approval image addition unit 14 adding an image showing completion of approval may be structured to perform the image addition processing by using an image 83 indicating completion of approval (for example, seal impression data 83) which is stored in the removable memory device 2 and which is specific to the user.

The approval image addition unit 14 adding an image showing completion of approval may add an image 83 indicating completion of approval at a predetermined position 33, when the read image data 15 is in a predetermined format.

The approval image addition unit 14 adding an image showing completion of approval may detect a mark written on the document 3, and may add an image 83 indicating completion of approval after changing the color or the size of the image 83 according to a content indicated by the mark.

The approval image addition unit 14 adding an image showing completion of approval may detect a mark written on the document 3, and may add any of a plurality of types of image 83 indicating completion of approval according to a content indicated by the mark.

The image reader 100 is provided with a digital signature processing unit 16 performing a digital signature processing on the read image data 15 after authentication by the authentication processing unit 6.

The digital signature processing unit 16 may perform the digital signature processing by using information (personal information for digital signature) 85 stored in the removable memory device 2.

The image reader 100 is provided with a format determination unit 13 and an image data storage processing unit 17. The format determination unit 13 determines a format of the read image data of the document 3 after the authentication by the authentication processing unit 6. Then, the image data storage processing unit 17 stores the read image data 15 in a specified storage destination by using the format information and image data storage destination information 86 according to formats stored in the removable memory device 2.

Furthermore, the image data storage processing unit 17 may detect a mark written on the document 3 after the authentication by the authentication processing unit 6, and may store the read image data 15 in a specified storage destination by using a content indicated by the mark and image data storage destination information 87 according to the content indicated by the mark stored in the removable memory device 2.

As the image data storage destination, a personal computer 4 to which the image reader 100 is connected or a server 5 on a network 19 to which the personal computer 4 is connected may be specified, as shown in FIG. 1. In this case, the personal computer 4 is provided with a PC-side image data storage processing unit 18 storing the read image data 15 in response to an instruction from the image data storage processing unit 17 of the image reader 100.

As described above, the image reader 100 of the present invention is an image reader provided with the removable memory device 2 which stores information for authenticating a user of the image reader 100 and the like. The user of the image reader 100 of the present invention prepares his own removable memory device 2 which stores authentication information for performing the authentication to identify whether the user is the person who has valid use authority in advance.

The removable memory device 2 may comprise a flash memory to be connected to the image reader body 1 via a USB (Universal Serial Bus).

When reading a document 3 with the image reader 100, the user who owns this removable memory device 2 first attaches or provides the removable memory device 2 on the image reader body 1 (in a attaching unit 101 thereof). When the removable memory device 2 is attached to, the image reader body 1 detects that it has been attached with the removable memory device 2 and then performs the identity authentication processing.

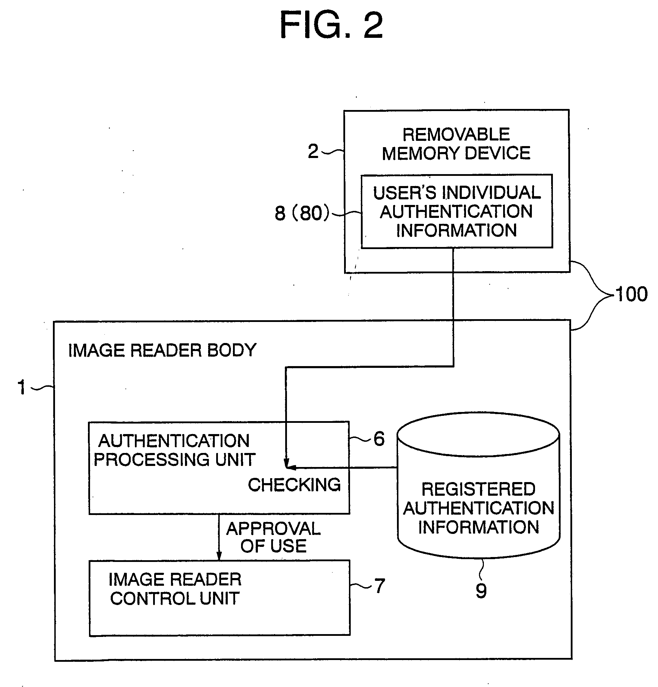

The identity authentication processing is performed as described below. That is, as shown in FIG. 2, an authentication processing unit 6 of the image reader body 1 acquires a user's individual authentication information 8 (for example, personal information 80) stored in the removable memory device 2 and checks the authentication information 8 and registered authentication information 9 which has been registered in advance in the image reader body 1 with each other to determine the user is the authorized person. Furthermore, when the authentication is successful, the authentication processing unit 6 sends information indicating approval of use to an image reader control unit 7 to enable use of the image reader 100.

The user's individual authentication information 8 used here may be personal information 80 such as the user's name, the user's address, and the company the user belongs to, or may be identification information such as the user's individual code number.

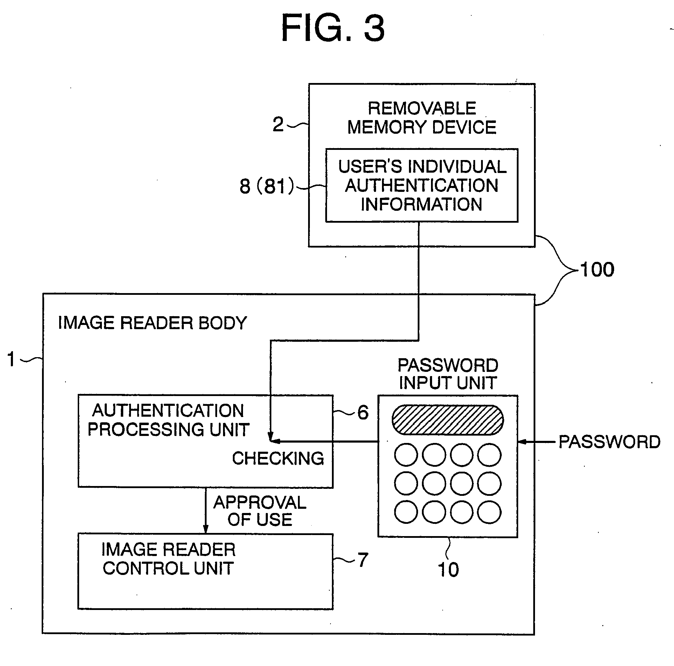

Instead of the performing identity authentication by checking the registered authentication information 9 and the user's individual authentication information 8 stored in the removable memory device 2 with each other, a user's individual password 81 may be stored as the authentication information 8 in the removable memory device 2, as shown in FIG. 3. In this case, at the starting to use the image reader 100, the user is caused to input a password from a password input unit 10 provided with the image reader body 1. Then, the authentication processing unit 6 checks the inputted password and the password 81 stored in the removable memory device 2 with each other to perform the identity authentication.

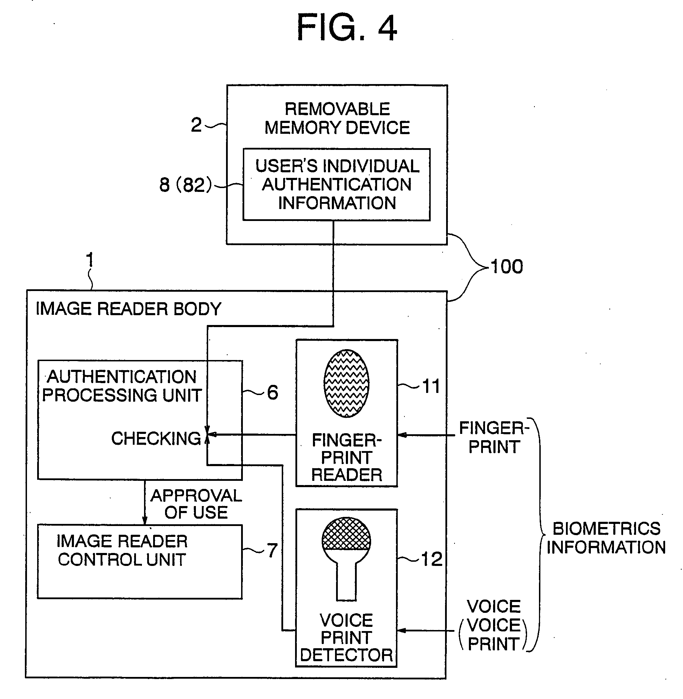

As shown in FIG. 4, a user's biometrics information 82 (such as a fingerprint and a voice print, etc.) may be stored in the removable memory device 2 as a user's individual authentication information 8. In this case, a fingerprint reader 11 or a voice print detector 12, which is provided with the image reader body 1, acquires biometrics information about a user when use of the image reader 100 is started, and the authentication processing unit 6 checks the biometrics information and the biometrics information 82 stored in the detachable memory device 2 with each other to perform the identity authentication.

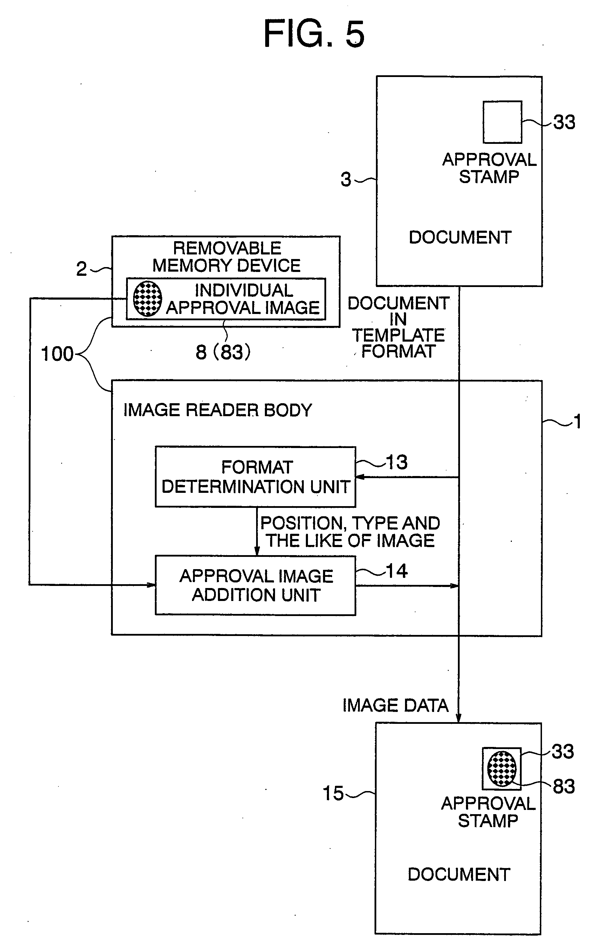

When the authentication is successful after the identity authentication is performed as described above, then the user can freely use the image reader 100. When the document 3 to be read is a document requiring approval processing, then an image 83 indicating completion of approval (such as an image of a seal impression, that is, seal impression data 83) is added to the read image data of the document 3, as shown in FIG. 5.

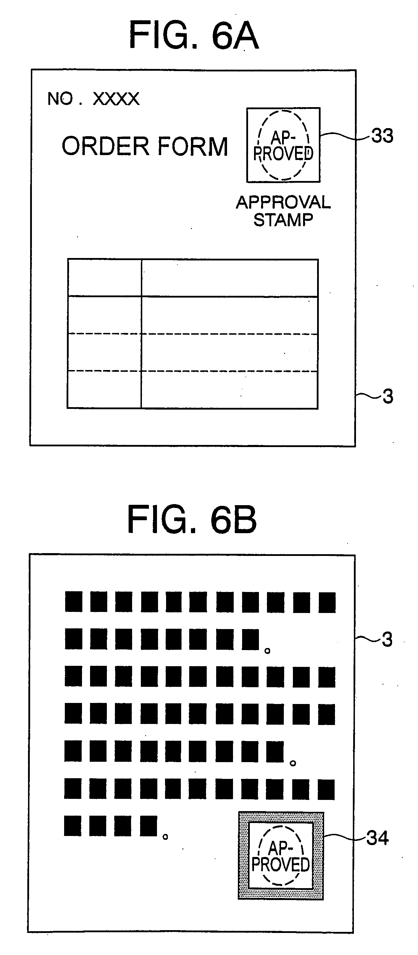

This processing is performed as described below. That is, as shown in FIG. 5, when the document 3 is read, a format determination unit 13 of the image reader body 1 determines whether the read image data of the document 3 (see FIG. 6) has a form of a predetermined template format registered in advance by the pattern recognition. When the read image data has the predetermined template format, the format determination unit 13 sends information about a position 33 at which an approval image 83 corresponding to the format is to be added, the type of the approval image 83 and the like to an approval image addition unit 14 which performs a processing of adding the approval image 83.

The approval image addition unit 14 receives the sent information about the position or type of the approval image 83, and then performs processing of embedding the approval image 83 in the read image data 15 at the position 33 specified by the information. In this case, the user's individual approval image 83 stored in the removable memory device 2 may be used as the approval image 83 to be embedded.

By performing such processing above described, image data 15 is outputted which is obtained by adding an approval image 83 to the read image data 15 of the document 3, as shown in FIG. 5.

As shown in FIG. 6A, the format determination unit 13, which determines a position or type of an approval image, may determine a template format by the pattern recognition, and may determine the position or type of an approval image 83 according to the format. As shown in FIG. 6B, in a case of reading a document 3 which does not have a template format, the format determination unit 13 may detect a mark 34 given on the document 3 by the user. In this case, the position and type of an approval image 83 may be determined according to a content indicated by the detected mark 34.

By specifying the approval image 83 according to the content indicated by the mark 34, for example, the user can specify the position of the approval image 83 with a highlighter pen. Furthermore, it is also possible to specify addition according to colors. For example, a mark 34 given with a yellow highlighter pen may specify addition of special seal impression data 83 with a date attached, and a mark 34 given with an orange highlighter pen may specify addition of normal seal impression data 83. In this way, the processing can be performed in accordance with the predetermined rules.

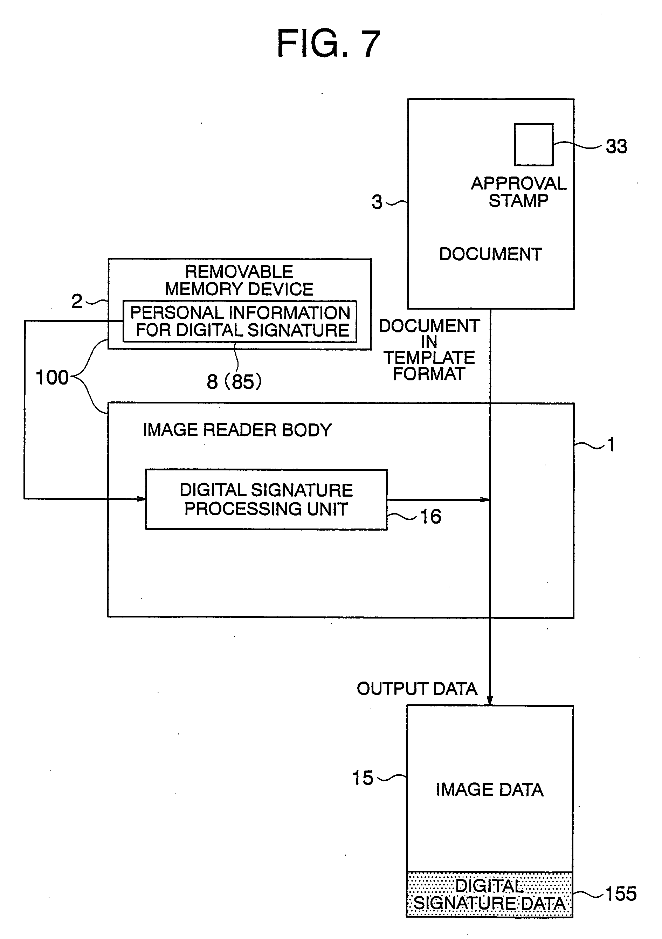

As shown in FIG. 7, digital signature can be performed in order to prevent unauthorized use of the read image data 15 obtained by reading the document 3 after the identity authentication, such as tampering and spoofing as the creator of the image data by others, in subsequent usage or storage of the read image data 15.

This processing is performed as described below. That is, as shown in FIG. 7, a digital signature processing unit 16 of the image reader body 1 adds digital signature data 155 to image data 15 obtained by reading a document 3 by using personal information for digital signature 85 stored in the removable memory device 2. Thereby, the digital signature is added which indicates that the user himself has created the read image data 15.

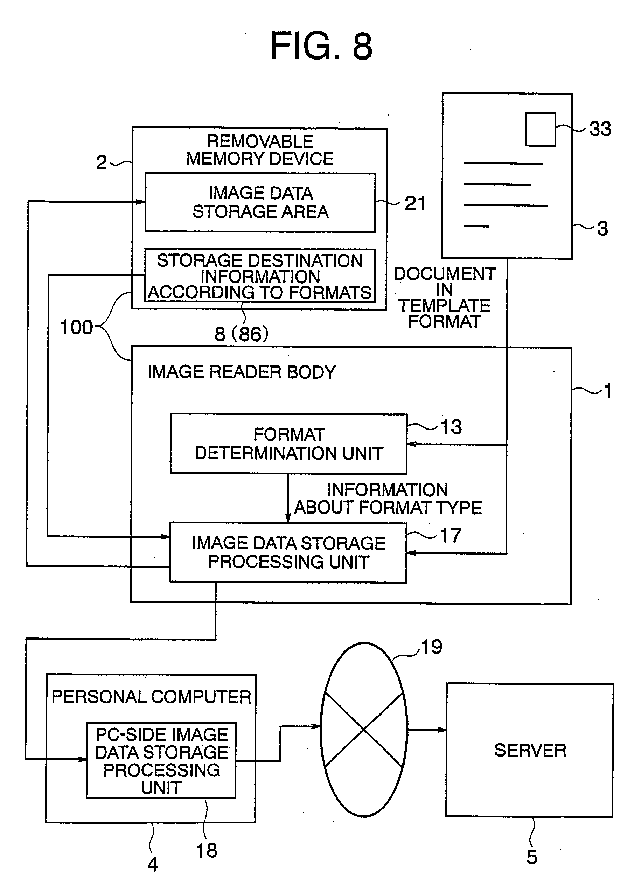

As described above, the read image data 15 read by processing of reading the image of a document 3 is automatically stored in a specified location according to image data storage destination information 84 stored in the removable memory device 2, as shown in FIG. 8.

This processing is performed as described below. That is, the format determination unit 13 determines a format of the read image data 15, then sends information about the determined format type to an image data storage processing unit 17, which performs a processing of storing the read image data 15. The image data storage processing unit 17 determines a storage destination of the read image data 15 based on the format type information and image data storage destination information 86 according to format types stored in the removable memory device 2. When the storage destination is an image data storage area 21 in the removable memory device 2, the image data storage processing unit 17 performs a processing of directly storing the read image data 15 in the removable memory device 2. When the storage destination is a different location from the area 21, the image data storage processing unit 17 sends the read image data 15 and storage destination information 84 to a PC-side image data storage processing unit 18 of the personal computer 4.

In a case that the storage destination is the personal computer 4, the PC-side image data storage processing unit 18 receives this information, and then performs a processing of storing the read image data 15 directly in the personal computer 4. In a case that the storage destination is not the personal computer 4 but the server 5 connected to the network 19, the PC-side image data storage processing unit 18 performs a network communication processing, and then the server 5 performs a processing of storing the image data 15 in the server 5.

As described above, a processing is performed automatically to store the read image data 15 in a specified storage location. In this case, instead of specifying a storage destination according to the format type of the read image data 15, the storage destination may be specified according to the content indicated by a mark 34 given on the document 3.

In this case, instead of the image data storage destination information 86 according to formats stored, the image data destination information 87 according to content indicated by a mark 34 (see FIG. 1) is stored in the removable memory device 2. Then, the format determination unit 13 detects the mark 34 given on the document 3 and sends information about the content indicated by the mark 34 to the image data storage processing unit 17. The image data storage processing unit 17 determines a storage destination from the information.

### Industrial Applicability

By utilizing the present invention, it is possible to provide an image reader which can ensure that only a user authorized to use the image reader can use the image reader, even when the image reader is used in a system in which security functions such as an authentication function is not provided on the host, or even when the image reader is used to perform image reading as a stand-alone without being connected to a host and to store image data directly in a memory device such as a flash memory. Further, it is possible to prevent unauthorized use of the image by adding to the image read by the image reader approval information or digital signature information indicating that the user himself made the image.

## Claims

1. An image reader for optically reading a document as an image in a electronic form, the image reader comprising:
a removable memory device provided on the image reader removably and storing authentication information for performing identity authentication; and
an authentication processing unit performing identity authentication by using the authentication information stored in the removable memory device.

2. The image reader according to claim 1, wherein the authentication processing unit performs the identity authentication by checking the authentication information stored in the removable memory device and authentication information registered in advance in the image reader with each other.

3. The image reader according to claim 1, further comprising:
an input unit inputting a password,
wherein the authentication processing unit performs the identity authentication by checking the password inputted from the input unit and a password information which is the authentication information stored in the removable memory device with each other.

4. The image reader according to claim 1, further comprising:
a detection unit detecting biometrics information such as a fingerprint and a voice print;
wherein the authentication processing unit performs the identity authentication by checking the biometrics information detected by the detection unit and biometrics information which is the authentication information stored in the removable memory device with each other.

5. The image reader according to claim 1, further comprising:
an approval image addition unit adding an image showing completion of approval such as an image of a seal impression, signature or logotype to an image of the document which is read by the image reader.

6. The image reader according to claim 5,
wherein the removable memory device further stores an image data for approval, and
wherein the approval image addition unit adding the image showing completion of approval adds the image showing completion of approval to the image of the document which is read by the image reader by using the image data for approval.

7. The image reader according to claim 5, wherein, when the image of the document which is read by the image reader has a predetermined format, the approval image addition unit adding the image showing completion of approval adds the image showing completion of approval at a predetermined position of the image of the document which is read by the image reader.

8. The image reader according to claim 5, wherein, when a predetermined mark written on the document is detected from the image of the document which is read by the image reader, the approval image addition unit adding the image showing completion of approval adds the image showing completion of approval whose color, size or the like is changed according to a content of the mark.

9. The image reader according to claim 5, wherein, when a predetermined mark written on the document is detected from the image of the document which is read by the image reader, the approval image addition unit adding the image showing completion of approval adds one of a plurality of types of images showing completion of approval according to a content of the mark.

10. The image reader according to claim 1, further comprising:
a digital signature processing unit performing a digital signature processing on an image of the document which is read by the image reader.

11. The image reader according to claim 10, wherein the digital signature processing unit performs the digital signature processing by using information stored in the removable memory device.

12. The image reader according to claim 1, further comprising:
a format determination unit recognizing a format of an image of the document which is read by the image reader; and
an image data storage processing unit storing the image of the document which is read by the image reader,
wherein the removable memory device stores information specifying a storage destination of the image of the document which is read by the image reader according to a format of the document, and
wherein the image data storage processing unit stores the image of the document which is read by the image reader in the specified storage destination according to the format recognized by the format determination unit and the information specifying the storage destination.

13. The image reader according to claim 1, further comprising:
an image data storage processing unit storing an image of the document which is read by the image reader,
wherein the removable memory device stores information specifying a storage destination of the image of the document which is read by the image reader according to a predetermined content of a mark, and
wherein, when the mark written on the document is detected, the image data storage processing unit stores the image of the document which is read by the image reader in the specified storage destination according to the predetermined content of the mark and the information specifying the storage destination.
